# EUROPÄISCHE PATENTSCHRIFT

(11) **EP 3 162 439 B1**
(45) Veröffentlichungstag und Bekanntmachung des Hinweises auf die Patenterteilung: **21.04.2021**
(21) Anmeldenummer: 15192277.0
(22) Anmeldetag: 30.10.2015
(51) Int. Cl.: B01L 3/00, G01N 21/03

(54) **VERFAHREN ZUR ERHÖHUNG DER KRATZBESTÄNDIGKEIT VON KUNSTSTOFFKÜVETTEN**
METHOD FOR INCREASING THE SCRATCH RESISTANCE OF PLASTIC CUVETTES
PROCEDE DESTINE A AUGMENTER LA RESISTANCE A L'ABRASION DE CUVETTES EN PLASTIQUE

(43) Veröffentlichungstag der Anmeldung: 03.05.2017
(73) Patentinhaber: Siemens Healthcare Diagnostics Products GmbH, 35041 Marburg (DE)
(72) Erfinder: Meindl, Josef, 65812 Bad Soden a. Ts. (DE); Pryshchepna, Oksana, 63456 Hanau (DE)

(56) Entgegenhaltungen:
- EP-A2- 0 787 827
- WO-A1-98/03575
- US-A- 5 989 692
- US-A1- 2014 295 563
- "Additive für Oberfläche und Untergrund", , 1. April 2012 (2012-04-01), XP055266037, Gefunden im Internet: URL:http://www.munzing.com/uploads/media/E DAPLAN-LA-METOLAT-Additive-fuer-Oberflaech e-und-Untergrund.pdf [gefunden am 2016-04-15]

## Beschreibung

Die vorliegende Erfindung liegt auf dem Gebiet der Verbrauchsmaterialien für automatische Analysegeräte und betrifft ein Verfahren zur Herstellung von Kunststoffküvetten mit erhöhter Kratzbeständigkeit.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messküvetten, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Die Messküvetten, in denen die Testansätze bereit gestellt, transportiert und schließlich mit Hilfe eines optischen Messverfahrens analysiert werden, sind im einfachsten Fall einstückig ausgeformt und bestehen üblicherweise aus lichtdurchlässigem Kunststoff. In der Regel werden die Messküvetten zum einmaligen Gebrauch, also als Einmal-Artikel vorgesehen, damit eine Reinigung und das damit verbundene Kontaminationsrisiko entfallen können. Dennoch werden an die Qualität der Messküvetten höchste Ansprüche gestellt, da bereits geringste Schwankungen, beispielsweise der Wanddicke, des Durchmessers, der Oberflächenbeschaffenheit oder der Kunststoffzusammensetzung die optischen Eigenschaften einer Messküvette beeinflussen und damit die Genauigkeit der optischen Analysen beeinträchtigen.

Moderne Analysegeräte können einen Durchsatz von bis zu mehreren hundert Einzelanalysen pro Stunde erreichen. Da für jede Einzelanalyse eine Messküvette benötigt wird, ist der Bedarf an Messküvetten entsprechend groß. Daher werden in den Analysegeräten häufig Vorratsbehälter für Messküvetten vorgesehen, die eine relativ große Anzahl von Messküvetten in Form von Schüttgut aufnehmen können. Das Schüttgut wird üblicherweise in Kunststoffbeuteln angeliefert und von einem Benutzer in den Vorratsbehälter im Analysegerät geschüttet. Vereinzelungsmechanismen unterschiedlichster Art sorgen dafür, dass eine Küvette nach der anderen aus dem Vorratsbehälter entnommen wird, um dann für eine geplante Analyse zur Verfügung zu stehen. Beispielsweise in US-A1-2014/0295563 ist ein derartiger Vorratsbehälter für Küvetten und ein spezifischer Vereinzelungsmechanismus beschrieben. Problematisch ist jedoch, dass durch die Aufbewahrung und den Transport der Messküvetten in Form von Schüttgut die Küvetten ständig aneinander reiben und so die äußere Oberfläche einzelner Küvetten verkratzen kann. Eine verkratzte Oberfläche kann jedoch zu unerwünschten optischen Effekten führen, die insbesondere bei Streulichtmessungen die Genauigkeit einer optischen Analyse schwerwiegend beeinträchtigen.

Dieses Problem ist im Stand der Technik auf verschiedene Weise gelöst. Eine Möglichkeit ist es, die Bauweise der Küvetten so anzupassen, dass der Bereich der Küvette, in dem die optische Messung durchgeführt wird, also das Messfenster, mit einem schützenden, erhabenen Rahmen versehen wird, damit zumindest die Oberfläche im Bereich des Messfensters vor Verkratzen geschützt ist. Eine andere Möglichkeit ist es, anstelle der üblicherweise verwendeten Polymethylmethacrylat- und Polystyrol-Kunststoffe wesentlich kratzbeständigere Kunststoffe wie beispielsweise Cyclo-Olefin-Copolymere zu verwenden.

Die bekannten Lösungen haben jedoch den Nachteil, dass sie verhältnismäßig kostenintensiv sind. Sowohl die Herstellung von Küvetten mit komplizierter Architektur als auch die Verwendung von höherwertigen Kunststoffen erhöhen die Herstellungskosten unter Umständen um ein Vielfaches.

Das Dokument EP 0 787 827 offenbart ein Verfahren zur Erhöhung der Kratzbeständigkeit einer aus einem lichtdurchlässigen Kunststoff bestehenden Messküvette und ein Verfahren zur optischen Analyse einer Flüssigkeit in der besagten Messküvette in einem automatischen Analysegerät.

US 5 989 692 offenbart eine Labvorrichtung mit einer Beschichtung. Die Beschichtung ist porös. Das gehärtete Produkt umfasst gehärtetes Harzmaterial und Gaszellen, die zumindest teilweise in dem gehärteten Harzmaterial eingeschlossen sind.

WO 98/03575 offenbart eine Polymerzusammensetzung, die beim Aushärten eine kratzfeste, dauerhafte Wirkung hat. Sie besteht aus einem Isocyanatpräpolymer mit nicht umgesetzten Isocyanatgruppen; einer organischen Lösungsmittellösung, einer hydrophilen Polyolverbindung und einem Tensid.

US 2014/295563 offenbart einen Vorratsbehälter für Küvetten und einen Vereinzelungsmechanismus. Der vorliegenden Erfindung lag daher die Aufgabe zugrunde, einfachste und kostengünstige Mittel und Verfahren zu finden, mit denen die Kratzbeständigkeit herkömmlicher Kunststoffküvetten derart erhöht werden kann, dass sie als Schüttgut aufbewahrt und transportiert werden können, und ohne dass ihre Eignung zur Verwendung in optischen Analysen beeinträchtigt wird.

Die Aufgabe wird erfindungsgemäß dadurch gelöst, dass ausschließlich die äußere Oberfläche einer aus lichtdurchlässigem Kunststoff bestehenden Messküvette mit einer Flüssigkeit, die mindestens ein Tensid enthält, in Kontakt gebracht wird und anschließend getrocknet wird.

Gegenstand der vorliegenden Erfindung ist also ein Verfahren zur Erhöhung der Kratzbeständigkeit einer aus lichtdurchlässigem Kunststoff bestehenden Messküvette, wobei ausschließlich die äußere Oberfläche der Messküvette mit einer Flüssigkeit, die mindestens ein Tensid enthält in Kontakt gebracht wird und anschließend getrocknet wird.

Es wurde gefunden, dass herkömmliche Messküvetten, die aus lichtdurchlässigem Polymethylmethacrylat oder aus Polystyrol bestehen, nach der erfindungsgemäßen Behandlung beständiger gegenüber Reibbeanspruchung sind und damit eine erhöhte Kratzfestigkeit aufweisen. Das erfindungsgemäße Verfahren zur Erhöhung der Kratzbeständigkeit eignet sich für aus lichtdurchlässigem Polystyrol oder Polymethylmethacrylat bestehende Messküvetten.

Unter dem Begriff "Messküvette" ist im Sinne der vorliegenden Erfindung ein im Wesentlichen röhrchenförmiges Behältnis mit einer Umwandung und einer Öffnung zur Aufnahme von zu analysierenden Flüssigkeiten zu verstehen. Der Querschnitt des Röhrchens kann verschiedene Formen aufweisen, beispielsweise rund, mehreckig, viereckig, quadratisch etc. Entlang der Längsachse des Röhrchens können auch mehrere Abschnitte vorgesehen sein, die unterschiedliche Querschnittsformen aufweisen. Derartige Messküvetten sind beispielsweise in EP-A2-2698626 beschrieben. Der Begriff "Küvette" impliziert, dass eine Messküvette für die optische Analyse einer zu analysierenden Flüssigkeiten vorgesehen ist. Eine Messküvette im Sinne der vorliegenden Erfindung hat eine Schichtdicke von mindestens 1 mm.

Unter dem Begriff "die äußere Oberfläche der Messküvette" ist im Sinne der vorliegenden Erfindung die äußere Oberfläche der Umwandung der Küvette zu verstehen, während die innere Oberfläche der Messküvette den Hohlraum, der für die Aufnahme einer zu analysierenden Flüssigkeiten vorgesehen ist, bildet. Das Inkontaktbringen der äußeren Oberfläche der Messküvette mit einer Flüssigkeit, die mindestens ein Tensid enthält kann auf unterschiedlichste Art und Weise erfolgen, z.B. durch Eintauchen, Besprühen, Bepinseln, Aufwalzen.

Das anschließende Trocknen der äußeren Oberfläche der Messküvette kann ebenfalls auf unterschiedliche Weise erfolgen. Zu bevorzugen ist die Lufttrocknung aufgrund ihrer Einfachheit.

Bevorzugterweise wird die äußere Oberfläche der Messküvette mit einer Flüssigkeit in Kontakt gebracht, die mindestens ein nicht-ionisches, ein anionisches, ein kationisches oder ein amphoteres Tensid enthält.

Bei einem nicht-ionischen Tensid handelt es sich bevorzugt um ein Fettalkoholalkoxylat, vorzugsweise ein

Fettalkoholalkoxylat aus der Gruppe Polyoxyethylen(20)-Sorbitan-Monolaurat (Handelsname: Tween 20) und Polyoxyethylen(20)-Sorbitan-Monooleat (Handelsname: Tween 80) .

Eine bevorzugte Konzentration von Tween 20 in der Flüssigkeit, die mit der äußeren Oberfläche der Messküvette in Kontakt gebracht wird, beträgt 0,5 bis 2 Volumenprozent. Zur Erhöhung der Kratzfestigkeit von Messküvetten aus Polymethylmethacrylat eignet sich bereits eine Tween 20-Konzentration von 0,5 Volumenprozent. Zur Erhöhung der Kratzfestigkeit von Messküvetten aus Polystyrol eignet sich eine Tween 20-Konzentration von mindestens 1 Volumenprozent.

Eine bevorzugte Konzentration von Tween 80 in der Flüssigkeit, die mit der äußeren Oberfläche der Messküvette in Kontakt gebracht wird, beträgt 0,5 bis 2 Volumenprozent. Zur Erhöhung der Kratzfestigkeit von Messküvetten aus Polymethylmethacrylat eignet sich bereits eine Tween 80-Konzentration von 0,5 Volumenprozent. Zur Erhöhung der Kratzfestigkeit von Messküvetten aus Polystyrol eignet sich eine Tween 80-Konzentration von mindestens 1 Volumenprozent.

Bei einem nicht-ionischen Tensid handelt es sich ferner bevorzugt um ein Alkylphenolethoxylat, vorzugsweise ein Alkylphenolethoxylat aus der Gruppe 4-(1,1,3,3-Tetramethylbutyl)phenyl-Polyethylene Glykol (Handelsname: Triton X-45), Octoxinol 9 (Handelsname: Triton X-100) und Nonylphenol Polyethylene Glykol Ether (Handelsname: Tergitol-NP9) .

Eine bevorzugte Konzentration von Triton X-45 in der Flüssigkeit, die mit der äußeren Oberfläche der Messküvette in Kontakt gebracht wird, beträgt 0,5 bis 3,5 Volumenprozent. Zur Erhöhung der Kratzfestigkeit von Messküvetten aus Polymethylmethacrylat eignet sich bevorzugt eine Triton X-45-Konzentration von 0,5 bis 2 Volumenprozent. Zur Erhöhung der Kratzfestigkeit von Messküvetten aus Polystyrol eignet sich bevorzugt eine Triton X-45-Konzentration von 3 bis 3,5 Volumenprozent.

Eine bevorzugte Konzentration von Triton X-100 in der Flüssigkeit, die mit der äußeren Oberfläche der Messküvette in Kontakt gebracht wird, beträgt 0,5 bis 2 Volumenprozent. Zur Erhöhung der Kratzfestigkeit von Messküvetten aus Polymethylmethacrylat eignet sich bereits eine Triton X-100-Konzentration von 0,5 Volumenprozent. Zur Erhöhung der Kratzfestigkeit von Messküvetten aus Polystyrol eignet sich eine Triton X-100-Konzentration von mindestens 1 Volumenprozent.

Eine bevorzugte Konzentration von Tergitol-NP9 in der Flüssigkeit, die mit der äußeren Oberfläche der Messküvette in Kontakt gebracht wird, beträgt 0,5 bis 2 Volumenprozent. Zur Erhöhung der Kratzfestigkeit von Messküvetten aus Polymethylmethacrylat eignet sich bereits eine Tergitol-NP9-Konzentration von 0,5 Volumenprozent. Zur Erhöhung der Kratzfestigkeit von Messküvetten aus Polystyrol eignet sich eine Tergitol-NP9-Konzentration von mindestens 1,5 Volumenprozent.

Bei einem nicht-ionischen Tensid handelt es sich ferner bevorzugt um ein Alkylpolyglykosid, vorzugsweise ein Alkylpolyglykosid aus der Gruppe Benzyl-Polyethylene Glykol (1,1,3,3-Tetramethylbutylphenyl) Ether (Handelsname: Triton CF-10) und Polyoxyethylene Polyoxypropylene tert-C12-13-Alkyl Amin (Handelsname: Triton CF-32).

Eine bevorzugte Konzentration von Triton CF-10 in der Flüssigkeit, die mit der äußeren Oberfläche der Messküvette in Kontakt gebracht wird, beträgt 0,5 bis 2 Volumenprozent.

Eine bevorzugte Konzentration von Triton CF-32 in der Flüssigkeit, die mit der äußeren Oberfläche der Messküvette in Kontakt gebracht wird, beträgt 0,5 bis 2 Volumenprozent. Zur Erhöhung der Kratzfestigkeit von Messküvetten aus Polymethylmethacrylat eignet sich bereits eine Triton CF-32-Konzentration von 0,5 Volumenprozent. Zur Erhöhung der Kratzfestigkeit von Messküvetten aus Polystyrol eignet sich eine Triton CF-32-Konzentration von mindestens 1 Volumenprozent.

Bei einem anionischen Tensid handelt es sich bevorzugt um Natriumdodecylsulfat oder Natriumstearat.

Eine bevorzugte Konzentration von Natriumdodecylsulfat in der Flüssigkeit, die mit der äußeren Oberfläche der Messküvette in Kontakt gebracht wird, beträgt 0,5 bis 2 Gewichtsprozent. Zur Erhöhung der Kratzfestigkeit von Messküvetten aus Polymethylmethacrylat eignet sich bereits eine Natriumdodecylsulfat-Konzentration von 0,5 Gewichtsprozent. Zur Erhöhung der Kratzfestigkeit von Messküvetten aus Polystyrol eignet sich eine Natriumdodecylsulfat-Konzentration von mindestens 1 Gewichtsprozent.

Eine bevorzugte Konzentration von Natriumstearat in der Flüssigkeit, die mit der äußeren Oberfläche der Messküvette in Kontakt gebracht wird, beträgt 0,5 bis 2 Gewichtsprozent. Zur Erhöhung der Kratzfestigkeit von Messküvetten aus Polymethylmethacrylat eignet sich bereits eine Natriumstearat-Konzentration von 0,5 Gewichtsprozent. Zur Erhöhung der Kratzfestigkeit von Messküvetten aus Polystyrol eignet sich eine Natriumstearat-Konzentration von mindestens 1 Gewichtsprozent.

Bei einem kationischen Tensid handelt es sich bevorzugt um Distearyldimethylammoniumchlorid oder ein Esterquat.

Eine bevorzugte Konzentration von Distearyldimethylammoniumchlorid in der Flüssigkeit, die mit der äußeren Oberfläche der Messküvette in Kontakt gebracht wird, beträgt 0,5 bis 2 Gewichtsprozent. Zur Erhöhung der Kratzfestigkeit von Messküvetten aus Polymethylmethacrylat eignet sich bereits eine Distearyldimethylammoniumchlorid-Konzentration von 0,5 Gewichtsprozent. Zur Erhöhung der Kratzfestigkeit von Messküvetten aus Polystyrol eignet sich eine Distearyldimethylammoniumchlorid-Konzentration von mindestens 1 Gewichtsprozent.

Bei einem amphoteren Tensid handelt es sich bevorzugt um Laurylsulfobetain.

Eine bevorzugte Konzentration von Laurylsulfobetain in der Flüssigkeit, die mit der äußeren Oberfläche der Messküvette in Kontakt gebracht wird, beträgt 1 bis 3,5 Gewichtsprozent. Zur Erhöhung der Kratzfestigkeit von Messküvetten aus Polymethylmethacrylat eignet sich bevorzugt eine Laurylsulfobetain-Konzentration von 1 bis 2 Gewichtsprozent. Zur Erhöhung der Kratzfestigkeit von Messküvetten aus Polystyrol eignet sich bevorzugt eine Laurylsulfobetain-Konzentration von 3 bis 3,5 Gewichtsprozent.

In einer weiteren Ausführungsform des erfindungsgemäßen Verfahrens wird die äußere Oberfläche der Messküvette mit einer Flüssigkeit in Kontakt gebracht, die zwei oder mehr der vorgenannten Tenside enthält, vorzugsweise eine Kombination aus mindestens einem Tensid der Gruppe der Alkylpolyglykoside und mindestens einem Tensid der Gruppe der Fettalkoholalkoxylate.

Vorzugsweise besteht die Flüssigkeit, mit der die äußere Oberfläche der Messküvette in Kontakt gebracht wird, aus Wasser und dem mindestens einen Tensid oder den mehreren Tensiden, d.h. die Flüssigkeit enthält außer Wasser und dem/den Tensid(en) keine weiteren nennenswerten Bestandteile.

Bei dem Wasseranteil der Flüssigkeit handelt es sich vorzugsweise um demineralisiertes, deionisiertes oder destilliertes Wasser. Dies bewirkt, dass nach dem Trocknen keine unerwünschten Rückstände auf der Oberfläche der Messküvetten zurückbleiben.

Ein weiterer Gegenstand der vorliegenden Erfindung ist eine Messküvette aus lichtdurchlässigem Kunststoff, vorzugsweise aus lichtdurchlässigem Polystyrol oder Polymethylmethacrylat, die durch ein erfindungsgemäßes Verfahren erhalten wird. Die äußere Oberfläche der erfindungsgemäßen Messküvetten ist mit einem oder mehreren Tensiden oder mit einem Triglycerid beschichtet. Erfindungsgemäße Messküvetten weisen gegenüber herkömmlichen Messküvetten eine erhöhte Kratzbeständigkeit auf.

Noch ein weiterer Gegenstand der vorliegenden Erfindung ist ein Schüttgut bestehend aus einer Vielzahl von erfindungsgemäßen Messküvetten. Der Begriff "Schüttgut" ist im Sinne der vorliegenden Erfindung so zu verstehen, dass die einzelnen Messküvetten relativ zueinander frei beweglich sind und nicht in einer bestimmten Lage gesichert sind. Vorzugsweise besteht ein erfindungsgemäßes Schüttgut aus 10 bis 1000 Messküvetten.

Vorzugsweise ist das Schüttgut, z.B. für den Transport oder für die Lager- oder Vorratshaltung, in einem Behälter enthalten, beispielsweise in einem Kunststoffbeutel. Ein weiterer Gegenstand der vorliegenden Erfindung ist daher ein Behälter enthaltend ein erfindungsgemäßes Schüttgut.

Die vorliegende Erfindung betrifft ferner ein Verfahren zur Bereitstellung eines Schüttguts bestehend aus einer Vielzahl von aus lichtdurchlässigem Kunststoff bestehenden Messküvetten. Das Verfahren umfasst die Schritte:
a. Formung einer Vielzahl einzelner Messküvetten aus dem lichtdurchlässigen Kunststoff; dann
b. Inkontaktbringen ausschließlich der äußeren Oberfläche jeder Messküvette mit einer Flüssigkeit, die mindestens ein Tensid enthält oder mit einem Triglycerid; dann
c. Trocknen der äußeren Oberfläche jeder Messküvette;
d. Platzieren der Messküvetten in einem Transportbehälter.

Die Formung der einzelnen Messküvetten kann beispielsweise durch ein herkömmliches Spritzgussverfahren erfolgen. Vorzugsweise werden die Messküvetten aus Polystyrol oder Polymethylmethacrylat geformt.

Das Inkontaktbringen ausschließlich der äußeren Oberfläche jeder Messküvette mit einer Flüssigkeit, die mindestens ein Tensid enthält und das anschließende Trocknen der äußeren Oberfläche jeder Messküvette muss nicht notwendigerweise, sollte aber möglichst zeitnah im Anschluss an die Formung der Messküvetten erfolgen, damit die Entstehung von Kratzern möglichst frühzeitig unterbunden wird. In jedem Fall ist die Oberflächenbehandlung jedoch vor dem Platzieren der Messküvetten in einem Transportbehälter durchzuführen, um zu verhindern, dass insbesondere beim Schütten der Messküvetten in den Transportbehälter und auch beim Transport der Messküvetten in Form eines Schüttguts eine erhöhte Reibung zwischen den beweglichen Küvetten entsteht.

Die vorliegende Erfindung betrifft ferner die Verwendung einer erfindungsgemäßen Messküvette in einem Verfahren zur optischen Analyse einer Flüssigkeit, wobei die zu analysierende Flüssigkeit in einer erfindungsgemäßen Messküvette enthalten ist. Bei der Flüssigkeit kann es sich um menschliche oder tierische Körperflüssigkeiten wie Blut, Plasma, Serum, Sputum, Exudat, bronchoalveoläre Lavage, Lymphflüssigkeit, Synovialflüssigkeit, Samenflüssigkeit, Fruchtwasser, Urin, Liquor, Muttermilch oder um Extrakte aus Haaren, Haut oder Gewebeproben handeln. Ferner kann es sich bei der Flüssigkeit um Zellkulturproben, pflanzliche Flüssigkeiten, Wasser- und Abwasserproben, Nahrungsmittel oder Arzneimittel handeln. Gegebenenfalls müssen die Proben vorbehandelt werden, um den Analyten für das Nachweisverfahren zugänglich zu machen oder um störende Probenbestandteile zu entfernen. Außerdem kann es sich bei der Flüssigkeit natürlich um einen Testansatz handeln, also ein Gemisch einer Probe mit einem oder mehreren Testreagenzien. In einem solchen Testansatz findet eine biochemische Reaktion statt, die eine messbare und mit dem zu bestimmenden Analyten korrelierende Veränderung einer optischen Eigenschaft des Testansatzes bewirkt.

Ein weiterer Gegenstand der vorliegenden Erfindung ist ein Verfahren zur optischen Analyse einer Flüssigkeit in einem automatischen Analysegerät, wobei das Analysegerät einen Vorratsbehälter umfasst, der eine Vielzahl von erfindungsgemäßen Messküvetten in Form von Schüttgut enthält. Das Verfahren umfasst dazu die folgenden Schritte:
a. automatische Entnahme einer einzelnen Messküvette aus dem Vorratsbehälter;
b. Positionierung der Messküvette in einer Aufnahmeposition;
c. Befüllen der Messküvette mit einer Flüssigkeit;
d. Durchstrahlen der in der Messküvette befindlichen Flüssigkeit mit Licht; und
e. Messen der Menge des von der Flüssigkeit absorbierten oder gestreuten Lichts.

Die automatische Entnahme einer einzelnen Messküvette aus dem Vorratsbehälter kann mittels eines beliebigen, herkömmlichen Vereinzelungsmechanismus erfolgen. Die Positionierung der Messküvette in einer Aufnahmeposition kann bereits vom Vereinzelungsmechanismus bewerkstelligt werden, oder es ist beispielsweise ein automatisch verfahrbarer Transferarm mit einem Küvettengreifer vorgesehen, der eine einzelne Küvette ergreift, an die gewünschte Zielposition transportiert und in einer Aufnahmeposition absetzt. Das Befüllen der Messküvette mit einer Flüssigkeit, beispielsweise mit einer zu analysierenden Flüssigkeit und mit einem oder mehreren Testreagenzien, wird vorzugsweise mit einer an einem automatisch verfahrbaren oder schwenkbaren Transferarm befestigten Pipettiervorrichtung durchgeführt. Das Durchstrahlen der in der Messküvette befindlichen Flüssigkeit mit Licht und das Messen der Menge des von der Flüssigkeit absorbierten oder gestreuten Lichts kann auf bekanntermaßen vielfältige Weise erfolgen.

Ein weiterer Gegenstand der vorliegenden Erfindung ist ein automatisches Analysegerät umfassend mindestens eine optische Messeinheit für die optische Analyse von in Messküvetten befindlichen Flüssigkeiten, mindestens einen Vorratsbehälter enthaltend eine Vielzahl von Messküvetten in Form von Schüttgut, mindestens eine Vorrichtung zur automatischen Entnahme einer einzelnen Messküvette aus dem Vorratsbehälter und zur Positionierung der Messküvette in einer Aufnahmeposition, wobei in dem Vorratsbehälter eine Vielzahl von erfindungsgemäßer Messküvetten in Form von Schüttgut enthalten sind.

Die folgenden Ausführungsbeispiele sollen die Erfindung exemplarisch veranschaulichen und sind nicht als Einschränkung zu verstehen.

### BEISPIEL 1: Herstellung erfindungsgemäßer Messküvetten

Zur Herstellung der tensidhaltigen Flüssigkeiten wurden die Tenside gemäß Tabelle 1 verwendet.

### Tabelle 1: Verwendete Tenside

| **Tensid** | **Handels- oder Trivialname** | **Hersteller** |
|---|---|---|
| **nicht-ionisch:** | | |
| Polyoxyethylen(20)-SorbitanMonolaurat | Tween 20 | BASF |
| Polyoxyethylen(20)-Sorbitan-Monooleat | Tween 80 | BASF |
| 4-(1,1,3,3-Tetramethylbutyl) phenyl-Polyethylene Glykol | Triton X-45 | Sigma-Aldrich Chemie GmbH |
| Octoxinol 9 | Triton X-100 | Sigma-Aldrich Chemie GmbH |
| Nonylphenol Polyethylene Glykol Ether | Tergitol-NP9 | Sigma-Aldrich Chemie GmbH |
| Benzyl-Polyethylene Glykol (1,1,3,3-Tetramethylbutylphenyl) Ether | Triton CF-10 | Stockmeier Chemie GmbH |
| Polyoxyethylene Polyoxypropylene tert-C12-13-Alkyl Amin | Triton CF-32 | Stockmeier Chemie GmbH |

| **amphoter:** | | |
|---|---|---|
| Laurylsulfobetain | --- | Sigma-Aldrich Chemie GmbH |

| **anionisch:** | | |
|---|---|---|
| Natriumdodecylsulfat | --- | BASF |
| Natriumstearat | --- | Sigma-Aldrich Chemie GmbH |

| **kationisch:** | | |
|---|---|---|
| Distearyldimethylammoniumchlorid | --- | Sigma-Aldrich Chemie GmbH |

Es wurden definierte Mengen der feststoffförmigen Tenside abgewogen und definierte Mengen der flüssigförmigen Tenside mit einer Dosierpipette aufgenommen und jeweils in destilliertem Wasser gelöst, so dass wässrige Lösungen mit definierten Tensid-Konzentrationen (Volumenprozent [% (v/v)] bzw. Gewichtsprozent [% (w/w)] erhalten wurden.

Kommerziell erhältliche, röhrchenförmige Messküvetten (kreisrunder Querschnitt, Innendurchmesser 7 mm, Wandstärke 0,77 mm, Höhe 30,5 mm) bestehend aus Polystyrol bzw. aus Polymethylmethacrylat wurden mit der Öffnung nach oben in jeweils eine tensidhaltige Flüssigkeit kurz eingetaucht (für ca.0,5-2 Sekunden), so dass die äußere Oberfläche bis kurz unterhalb des oberen Randes der Küvette mit Flüssigkeit benetzt wurde und keine Flüssigkeit in das Messküvetteninnere eindringen konnte. Nach der Entnahme aus der Flüssigkeit wurden die Küvetten mit der Öffnung nach unten auf ein saugfähiges Löschpapier gestellt und für mindestens 20-40 Minuten bei Raumtemperatur getrocknet.

### BEISPIEL 2: Bestimmung der Kratzbeständigkeit erfindungsgemäßer Messküvetten

Die gemäß Beispiel 1 hergestellten Messküvetten wurden in Reibversuchen untersucht. Dazu wurden jeweils zwei gleichartig beschichtete, d.h. mit derselben tensidhaltigen Lösung behandelte Küvetten in zwei Halterungen eines Prüfgeräts spannungsfrei fixiert und so übereinander angeordnet, dass die Oberflächen der Küvetten im Reibversuch planparallel zu liegen kamen. Die Halterung für die obere Küvette ist stationär ausgebildet; die Halterung für die untere Küvette ist auf einem horizontal beweglichen Probentisch angeordnet. Beim Reibversuch wurde die obere Küvette auf die untere Küvette abgesenkt, und es wurde eine Prüfkraft von 20 N erzeugt (aus einer Abschätzung der Praxisbeanspruchung ist mit einem Auftreten von Kratzern ab einer Kraft von ca. 1 N zu rechnen). Für den Probentisch, auf dem die untere Küvette angeordnet war, wurde ein Verfahrweg von ca. 10 mm eingestellt, und die obere Küvette wurde von der unteren Küvette in eine Richtung zweifach mit einer Prüfkraft von 20 N überfahren. Die dadurch auf den Oberflächen der oberen und der unteren Küvette erzeugten Reibspuren wurden lichtmikroskopisch in Augenschein genommen, und die erhöhte Kratzfestigkeit und damit verbesserte Verschleißbeständigkeit gegenüber unbeschichteten Küvetten wurde durch den Versuchsleiter eingeschätzt.

Es wurde beobachtet, dass durch den Reibkontakt auf der Oberfläche der oberen, ruhenden Küvette schichtartig verschmierte Bereiche mit flächenhafter Ausbreitung entstanden, während in der unteren, bewegten Küvette vielmehr in Laufrichtung strichförmige Verschleißerscheinungsformen entstanden, die von feinen Strichen bis zu flächenhaft strichartiger Beschädigungen der Oberfläche reichten. Anhand dieser Merkmale wurde die qualitative Einschätzung zur Verbesserung der Verschleißbeständigkeit (Kratzbeständigkeit) gegenüber unbeschichteten Küvetten vorgenommen. Es wurden folgende Bewertungsqualitäten verwendet:

| | | |
|---|---|---|
| "+++" | für | "sehr gute" Verbesserung der Verschleißbeständigkeit; |
| "++" | für | "gute" Verbesserung der Verschleißbeständigkeit; |
| "+" | für | "mäßige" Verbesserung der Verschleißbeständigkeit; |
| "-" | für | "keine" Verbesserung der Verschleißbeständigkeit. |

Die Ergebnisse der qualitativen Bewertung der Verschleißbeständigkeit der verschiedenartig beschichteten Polystyrol- oder Polymethylmethacrylat-Küvetten sind in den Tabellen 2 und 3 dargestellt.

**Tabelle 2: Qualitative Bewertung der Verschleißbeständigkeit von beschichteten Polymethylmethacrylat-Küvetten**

| Tensid-Konzentration der tensidhaltigen Lösung | Verschleißbeständigkeit | |
|---|---|---|
| | obere Küvette | untere Küvette |
| Tween 20, 0,5 % (v/v) | ++ | ++ |
| Tween 20, 1 % (v/v) | ++ | ++ |
| Tween 80, 0,5 % (v/v) | ++ | +++ |
| Triton X-45, 0,5 % (v/v) | ++ | ++ |
| Triton X-100, 0,5 % (v/v) | ++ | +++ |
| Tergitol-NP9, 0,5 % (v/v) | ++ | +++ |
| Triton CF-10, 0,5 % (v/v) | ++ | +++ |
| Triton CF-32, 0,5 % (v/v) | ++ | +++ |
| Laurylsulfobetain, 1 % (w/w) | ++ | ++ |
| Distearyldimethylammoniumchlorid, 0,5 % (w/w) | ++ | ++ |
| Natriumdodecylsulfat, 0,5 % (w/w) | + | ++ |
| Natriumstearat, 0,5 % (w/w) | + | + |

Aus Tabelle 2 geht hervor, dass mit jeder getesteten tensidhaltigen Flüssigkeit eine Verbesserung der Kratzbeständigkeit der Oberfläche von Polymethylmethacrylat-Küvetten erzielt wird.

**Tabelle 3: Qualitative Bewertung der Verschleißbeständigkeit von beschichteten Polystyrol-Küvetten**

| Tensid-Konzentration der tensidhaltigen Lösung | Verschleißbeständigkeit | |
|---|---|---|
| | obere Küvette | untere Küvette |
| Tween 20, 1 % (v/v) | + | + |
| Tween 20, 2 % (v/v) | + | + |
| Tween 80, 1 % (v/v) | ++ | ++ |
| Triton X-45, 3,34 % (v/v) | + | + |
| Triton X-100, 1 % (v/v) | + | + |
| Tergitol-NP9, 1,43 % (v/v) | + | + |
| Triton CF-10, 0,5 % (v/v) | + | ++ |
| Triton CF-32, 1 % (v/v) | + | ++ |
| Laurylsulfobetain, 3,34 % (w/w) | + | + |
| Distearyldimethylammoniumchlorid, 1 % (w/w) | +- | ++ |
| Natriumdodecylsulfat, 1 % (w/w) | +- | ++ |
| Natriumstearat, 1 % (w/w) | + | + |

Aus Tabelle 3 geht hervor, dass mit jeder getesteten tensidhaltigen Flüssigkeit eine Verbesserung der Kratzbeständigkeit der Oberfläche von Polystyrol-Küvetten erzielt wird.

## Patentansprüche

1. Verfahren zur Erhöhung der Kratzbeständigkeit einer aus einem lichtdurchlässigen Kunststoff aus der Gruppe Polystyrol und Polymethylmethacrylat bestehenden Messküvette, wobei ausschließlich die äußere Oberfläche der Messküvette mit einer Flüssigkeit in Kontakt gebracht wird und anschließend getrocknet wird, **dadurch gekennzeichnet, dass** die Flüssigkeit aus demineralisiertem, deionisiertem oder destilliertem Wasser und einem oder mehreren Tensiden besteht.

2. Verfahren gemäß Anspruch 1, wobei die Flüssigkeit mindestens ein nicht-ionisches, ein anionisches, ein kationisches oder ein amphoteres Tensid enthält.

3. Verfahren gemäß Anspruch 2, wobei das nicht-ionische Tensid ein Fettalkoholalkoxylat ist, vorzugsweise aus der Gruppe Polyoxyethylen(20)-Sorbitan-Monolaurat (Tween 20) und Polyoxyethylen(20)-Sorbitan-Monooleat (Tween 80).

4. Verfahren gemäß Anspruch 2, wobei das nicht-ionische Tensid ein Alkylphenolethoxylat ist, vorzugsweise aus der Gruppe 4-(1,1,3,3-Tetramethylbutyl)phenyl-Polyethylene Glykol (Triton X-45), Octoxinol 9 (Triton X-100) und Nonylphenol Polyethylene Glykol Ether (Tergitol-NP9).

5. Verfahren gemäß Anspruch 2, wobei das nicht-ionische Tensid ein Alkylpolyglykosid ist, vorzugsweise aus der Gruppe Benzyl-Polyethylene Glykol (1,1,3,3-Tetramethylbutylphenyl) Ether (Triton CF-10) und Polyoxyethylene Polyoxypropylene tert-C12-13-Alkyl Amin (Triton CF-32).

6. Verfahren gemäß Anspruch 2, wobei das anionische Tensid Natriumdodecylsulfat oder Natriumstearat ist.

7. Verfahren gemäß Anspruch 2, wobei das kationische Tensid Distearyldimethylammoniumchlorid oder ein Esterquat ist.

8. Verfahren gemäß Anspruch 2, wobei das amphotere Tensid Laurylsulfobetain ist.

9. Verfahren gemäß einem der vorhergehenden Ansprüche, wobei die Flüssigkeit zwei oder mehr Tenside enthält, vorzugsweise mindestens ein Alkylpolyglykosid und mindestens ein Fettalkoholalkoxylat.

10. Messküvette aus einem lichtdurchlässigen Kunststoff aus der Gruppe Polystyrol und Polymethylmethacrylat, bei der ausschließlich die äußere Oberfläche mit einem oder mehreren Tensiden beschichtet ist und die erhältlich ist durch ein Verfahren gemäß einem der Ansprüche 1-9.

11. Schüttgut bestehend aus einer Vielzahl von Messküvetten gemäß Anspruch 10, vorzugsweise bestehend aus 10 bis 1000 Messküvetten.

12. Behälter enthaltend ein Schüttgut gemäß Anspruch 11.

13. Verfahren zur Bereitstellung eines Schüttguts bestehend aus einer Vielzahl von aus lichtdurchlässigem Kunststoff bestehenden Messküvetten, das Verfahren umfassend die Schritte:
a. Formung einer Vielzahl einzelner Messküvetten aus einem lichtdurchlässigen Kunststoff aus der Gruppe Polystyrol und Polymethylmethacrylat; dann
b. Inkontaktbringen ausschließlich der äußeren Oberfläche jeder Messküvette mit einer Flüssigkeit, die aus demineralisiertem, deionisiertem oder destilliertem Wasser und einem oder mehreren Tensiden besteht; dann
c. Trocknen der äußeren Oberfläche jeder Messküvette;
d. Platzieren der Messküvetten in einem Transportbehälter.

14. Verwendung einer Messküvette gemäß Anspruch 10 in einem Verfahren zur optischen Analyse einer Flüssigkeit.

15. Verfahren zur optischen Analyse einer Flüssigkeit in einem automatischen Analysegerät mit einem Vorratsbehälter enthaltend eine Vielzahl von Messküvetten gemäß Anspruch 10 in Form von Schüttgut, umfassend die Schritte:
a. automatische Entnahme einer einzelnen Messküvette aus dem Vorratsbehälter;
b. Positionierung der Messküvette in einer Aufnahmeposition;
c. Befüllen der Messküvette mit einer Flüssigkeit;
d. Durchstrahlen der in der Messküvette befindlichen Flüssigkeit mit Licht; und
e. Messen der Menge des von der Flüssigkeit absorbierten oder gestreuten Lichts.

16. Automatisches Analysegerät umfassend mindestens eine optische Messeinheit für die optische Analyse von in Messküvetten befindlichen Flüssigkeiten, mindestens einen Vorratsbehälter enthaltend eine Vielzahl von Messküvetten in Form von Schüttgut, mindestens eine Vorrichtung zur automatischen Entnahme einer einzelnen Messküvette aus dem Vorratsbehälter und zur Positionierung der Messküvette in einer Aufnahmeposition, **dadurch gekennzeichnet, dass** in dem Vorratsbehälter eine Vielzahl von Messküvetten gemäß Anspruch 10 in Form von Schüttgut enthalten sind.

## Claims

1. Method for increasing the scratch resistance of a measuring cuvette consisting of a transparent plastic from the group of polystyrene and polymethyl methacrylate, wherein exclusively the outer surface of the measuring cuvette is brought into contact with a liquid and is then dried, **characterized in that** the liquid consists of demineralized, deionized or distilled water and one or more surfactants.

2. Method according to Claim 1, wherein the liquid comprises at least one non-ionic, one anionic, one cationic or one amphoteric surfactant.

3. Method according to Claim 2, wherein the non-ionic surfactant is a fatty alcohol alkoxylate, preferably from the group of polyoxyethylene(20) sorbitan monolaurate (Tween 20) and polyoxyethylene(20) sorbitan monooleate (Tween 80).

4. Method according to Claim 2, wherein the non-ionic surfactant is an alkylphenol ethoxylate, preferably from the group of 4-(1,1,3,3-tetramethylbutyl)phenyl-polyethylene glycol (Triton X-45), octoxynol 9 (Triton X-100) and nonylphenol polyethylene glycol ether (Tergitol NP-9).

5. Method according to Claim 2, wherein the non-ionic surfactant is an alkyl polyglycoside, preferably from the group of benzyl-polyethylene glycol (1,1,3,3-tetramethylbutylphenyl) ether (Triton CF-10) and polyoxyethylene polyoxypropylene tert-C12-13-alkyl amine (Triton CF-32).

6. Method according to Claim 2, wherein the anionic surfactant is sodium dodecylsulfate or sodium stearate.

7. Method according to Claim 2, wherein the cationic surfactant is distearyldimethylammonium chloride or an ester quat.

8. Method according to Claim 2, wherein the amphoteric surfactant is lauryl sulfobetaine.

9. Method according to any of the preceding claims, wherein the liquid comprises two or more surfactants, preferably at least one alkyl polyglycoside and at least one fatty alcohol alkoxylate.

10. Measuring cuvette composed of a transparent plastic from the group of polystyrene and polymethyl methacrylate, in which exclusively the outer surface is coated with one or more surfactants and which is obtainable by a method according to any of Claims 1-9.

11. Bulk good consisting of a multiplicity of measuring cuvettes according to Claim 10, preferably consisting of 10 to 1000 measuring cuvettes.

12. Container comprising a bulk good according to Claim 11.

13. Method for providing a bulk good consisting of a multiplicity of measuring cuvettes consisting of transparent plastic, the method comprising the steps of:
a. forming a multiplicity of individual measuring cuvettes composed of a transparent plastic from the group of polystyrene and polymethyl methacrylate; then
b. bringing into contact exclusively the outer surface of each measuring cuvette with a liquid consisting of demineralized, deionized or distilled water and one or more surfactants; then
c. drying the outer surface of each measuring cuvette;
d. placing the measuring cuvettes in a transport container.

14. Use of a measuring cuvette according to Claim 10 in a method for the optical analysis of a liquid.

15. Method for the optical analysis of a liquid in an automatic analytical instrument having a stock container comprising a multiplicity of measuring cuvettes according to Claim 10 in the form of a bulk good, comprising the steps of:
a. automatic withdrawal of an individual measuring cuvette from the stock container;
b. positioning the measuring cuvette in a receiving position;
c. filling the measuring cuvette with a liquid;
d. irradiating the liquid located in the measuring cuvette with light; and
e. measuring the amount of light absorbed or scattered by the liquid.

16. Automatic analytical instrument comprising at least one optical measuring unit for the optical analysis of liquids located in measuring cuvettes, at least one stock container comprising a multiplicity of measuring cuvettes in the form of a bulk good, at least one device for the automatic withdrawal of an individual measuring cuvette from the stock container and for positioning the measuring cuvette in a receiving position, **characterized in that** a multiplicity of measuring cuvettes according to Claim 10 are present in the stock container in the form of a bulk good.

## Revendications

1. Procédé pour augmenter la résistance à l'abrasion d'une cuvette de mesure en une matière plastique transparente du groupe du polystyrène et du poly (méthacrylate de méthyle), dans lequel on met exclusivement la surface extérieure de la cuvette de mesure en contact avec un liquide et ensuite on la sèche, **caractérisé en ce que** le liquide consiste en de l'eau déminéralisée, désionisée ou distillée et en un ou en plusieurs agents tensioactifs.

2. Procédé suivant la revendication 1, dans lequel le liquide contient au moins un agent tensioactif non ionique, un agent tensioactif anionique, un agent tensioactif cationique ou un agent tensioactif amphotère.

3. Procédé suivant la revendication 1, dans lequel l'agent tensioactif non ionique est un alcoolate d'alcool gras, de préférence du groupe du monolaurate de polyoxyéthylène (20) - sorbitan (Tween 20) et du monooléate de polyoxyéthylène (20) - sorbitan (Tween 80).

4. Procédé suivant la revendication 2, dans lequel l'agent tensioactif non ionique est un éthoxylate d'alcoylphénol, de préférence du groupe du 4- (1, 1, 3, 3- tétraméthylbutyl) phényl-polyéthylèneglycol (TritonX-45) de l'octoxinol 9 (Triton X-100) et de l'oxyde de nonylphénol polyéthylène glycol (Tergitol-NP9).

5. Procédé suivant la revendication 2, dans lequel l'agent tensioactif non ionique est un alcoyl polyglycoside, de préférence du groupe de l'oxyde benzylique de polyéthylèneglycol (1, 1, 3, 3- tétraméthylbutylphényle) (triton CF-10) et de la polyoxyéthylène polyoxypropylène tert-C12-13-alcoylamine (triton CF-32).

6. Procédé suivant la revendication 2, dans lequel l'agent tensioactif anionique est le dodécylsulfate de sodium ou le stéarate de sodium.

7. Procédé suivant la revendication 2, dans lequel l'agent tensioactif cationique est le chlorure de distéaryldiméthylammonium ou un esterquat.

8. Procédé suivant la revendication 2, dans lequel l'agent tensioactif amphotère est la laurylsufobétaine.

9. Procédé suivant l'une des revendications précédentes, dans lequel le liquide contient deux ou plusieurs agents tensioactifs, de préférence au moins un alcoylpolyglycoside et au moins un alcoolate d'alcool gras.

10. Cuvette de mesure en une matière plastique transparente du groupe du polystyrène et du poly (méthacrylate de méthyle), dans laquelle exclusivement la surface extérieure est revêtue d'un ou de plusieurs agents tensioactifs et qui peut être obtenue par un procédé suivant l'une des revendications 1 à 9.

11. Produit en vrac constitué d'une pluralité de cuvettes de mesure suivant la revendication 10, constitué de préférence de 10 à 1 000 cuvettes de mesure.

12. Récipient contenant un produit en vrac suivant la revendication 11.

13. Procédé de mise à disposition d'un produit en vrac consistant en une pluralité de cuvettes de mesure en matière plastique transparente, le procédé comprenant les stades :
a. la formation d'une pluralité de cuvettes de mesure individuelles en une matière plastique transparente du groupe du polystyrène et du poly (méthacrylate de méthyle) ; puis
b. la mise en contact exclusivement de la surface extérieure de chaque cuvette de mesure avec un liquide, qui est constitué d'eau déminéralisée, désionisée ou distillée et d'un ou plusieurs agents tensioactifs ; puis
c. le séchage de la surface extérieure de chaque cuvette de mesure ;
d. le placement des cuvettes de mesure dans un récipient de transport.

14. Utilisation d'une cuvette de mesure suivant la revendication 10, dans un procédé d'analyse optique d'un liquide.

15. Procédé d'analyse optique d'un liquide dans un appareil automatique d'analyse, comprenant un réservoir contenant une pluralité de cuvettes de mesure suivant la revendication 10 sous forme de produit en vrac, comprenant les stades :
a. le prélèvement automatique d'une cuvette de mesure individuelle du réservoir ;
b. la mise en position de la cuvette de mesure en une position de réception ;
c. le remplissage de la cuvette de mesure par un liquide ;
- d. le rayonnement de lumière dans le liquide se trouvant dans la cuvette de mesure ;
e. la mesure de la quantité de lumière absorbée ou dispersée par le liquide.

16. Appareil automatique d'analyse, comprenant au moins une unité optique de mesure pour l'analyse optique de liquides se trouvant dans des cuvettes de mesure, au moins un réservoir contenant une pluralité de cuvettes de mesure sous la forme de produit en vrac, au moins un système de prélèvement automatique d'une cuvette de mesure individuelle du réservoir et de mise en position de la cuvette de mesure en une position de réception, **caractérisé en ce qu'**une pluralité de cuvettes de mesure suivant la revendication 10 sont contenues sous la forme de produit en vrac dans le réservoir.
